# EUROPÄISCHE PATENTSCHRIFT

(11) **EP 2 101 133 B1**
(45) Veröffentlichungstag und Bekanntmachung des Hinweises auf die Patenterteilung: **27.07.2016**
(21) Anmeldenummer: 09001982.9
(22) Anmeldetag: 12.02.2009
(51) Int. Cl.: F27B 17/02, F27D 5/00

(54) **Sinterofen für Dentalpräparate**
Sintering furnace for dental prostheses
Four de frittage pour préparations dentaires

(30) Priorität: 11.03.2008 DE 102008013555
(43) Veröffentlichungstag der Anmeldung: 16.09.2009
(73) Patentinhaber: Straumann Holding AG, 4002 Basel (CH)
(72) Erfinder: Neumann, Michael, 82166 Gräfelfing (DE)
(74) Vertreter: Grünecker Patent- und Rechtsanwälte PartG mbB

(56) Entgegenhaltungen:
- DE-A1- 19 824 497
- DE-B- 1 043 919
- DE-C1- 19 606 493
- JP-A- 8 136 147
- US-A- 4 208 573

## Beschreibung

Die Erfindung betrifft einen Sinterofen für Dentalpräparate,

Bekannt sind Sinteröfen, in die zu sinternde Objekte eingelegt werden können. Hierzu weist der Ofen eine Tür auf, die einen Heizraum verschließt. In dem Heizraum kann durch zeitliche Variation der Temperatur ein gewünschter Sintervorgang durchgeführt werden. Nach Beendigung des Sintervorgangs kann die Tür geöffnet und das so gesinterte Objekt entnommen werden.

Die Sinterung von Dentalpräparaten kann etwas mehr als 9 Stunden jedoch auch mehr als 10 oder 12 bis zu 15 Stunden betragen. Für einzelne, handgefertigte Dentalpräparate sind hier kleine Sinteröfen von Vorteil.

DE 196 06 493 C1 offenbart einen Brennofen zum Brennen von dentalkeramischem Material, bei dem in der Brennkammer ein Temperaturgradient erzeugt werden kann und über einen im Brenngutträger eingebauten Thermosensor durch Vergleich der Ist-Temperatur mit der Soll-Temperatur der verstellbare Brenngutträger längs des Temperaturgradienten in die gewünschte Temperaturzone gefahren werden kann.

JP 08136147 offenbart einen Ofen, in dem eine Vielzahl von elektrischen Heizern um eine Heizstrecke herum angeordnet sind, so dass verschiedene Temperaturen entlang der Heizstrecke eingestellt werden können.

Aufgabe der vorliegenden Erfindung ist es, einen Sinterofen zum Sintern zur Verfügung zu stellen, mit dem Dentalpräparate in größeren Mengen vorteilhaft gesintert werden können. Dentalpräparate in größeren Mengen werden beispielsweise durch CAD/CAM-Prozesse ermöglicht.

Diese Aufgabe wird gelöst durch einen Sinterofen nach Anspruch 1. Bevorzugte Ausführungsformen sind in den abhängigen Ansprüchen offenbart.

Sollen beispielsweise an einem Tag mehrere Hundert oder mehrere Tausend Dentalpräparate gesintert werden, würde dies bei herkömmlichen Öfen dazu führen, dass zwei- oder dreimal innerhalb von 24 Stunden mehrere Hundert oder Tausend Dentalpräparate fertig gesintert sind, dazwischen jedoch keine Präparate fertig gestellt werden. Dies ist für eine wirtschaftliche Verarbeitung von Nachteil. Weiterhin benötigt das Aufheizen und Abkühlen von den Sinteröfen relativ viel Energie.

Mit dem Sinterofen nach Anspruch 1 wird eine Sinterstrecke geschaffen, entlang der Dentalpräparate bewegt werden können und dabei verschiedenen Temperaturen ausgesetzt werden. Dies führt dazu, dass ein Ofen nicht mehr für einen Sintervorgang komplett aufgeheizt und abgekühlt werden muss, da die auf hohe Temperaturen aufgeheizten Teile aufgeheizt bleiben und lediglich die Dentalpräparate selber beim Bewegen durch die verschiedenen Temperaturen entlang der Sinter-strecke oder andere entlang der Sinterstrecke bewegten Mittel aufgeheizt bzw. abgekühlt werden. Zudem ist die Sinterstrecke in einzelne Sinterstreckensegmente eingeteilt, wobei sämtliche Sinterstreckensegmente eine Länge na haben, die dem ganzzahligen Vielfachen (n = 1, 2, 3 ...) der Länge a des kürzesten Sinterstreckensegments entspricht, wobei in jedem Sinterstreckensegment eine der verschiedenen Temperaturen eingestellet werden kann. Zum Heizen der Sinterstrecke sind vorzugsweise Heizelemente vorgesehen, die oberhalb und/oder unterhalb der Sinterstrecke angeordnet sind. Insbesondere im Anfangsbereich der Sinterstrecke sind Heizelemente oben und unten vorgesehen, so dass ein schnelles Aufheizen möglich ist.

Verschiedene Sinterstreckensegmente können auf ein und dieselbe Temperatur eingeregelt werden, so dass sich hierdurch mit möglichst geringem Regelaufwand ein wohldefiniertes Temperaturprofil gewinnen lässt.

Vorzugsweise werden weiterhin Träger für die Dentalpräparate eingesetzt, die entlang der Sinterstrecke bewegt werden können. Die Träger werden hierbei über die Heizelemente bewegt und/oder darunter durchgeführt bzw. zwischen Heizelementen durchbewegt. Werden die Träger über die Heizelemente bewegt, so führt dies dazu, dass die Heizelemente nicht direkt die Dentalpräparate heizen, sondern vielmehr die Träger, die dann ihrerseits die Dentalpräparate aufheizen. Die Heizelemente neigen dazu, durch ihre eigenen hohen Temperaturen abzudampfen, indem beispielsweise einzelne Atome oder Moleküle von den Heizelementen sublimieren und sich dann auf den Dentalpräparaten niederschlagen und dort zu Verfärbungen führen. Durch die Anordnung der Träger zwischen die Heizelemente und die Dentalpräparate sind die Dentalpräparate vor derartigen Ablagerungen durch die Heizelemente geschützt.

In den Bereichen, in denen die Heizelemente auf nur vergleichsweise niedrige Temperatur, wie beispielsweise weniger als 800 °C, 1.000 °C oder 1.200 °C, aufheizen sollen, und dementsprechend eine Temperatur von nicht mehr als 800 °C, 1.000 °C oder 1.200 °C haben, können Heizelemente auch oberhalb der Sinterstrecke eingesetzt werden, die direkt auch durch Infrarotstrahlung die Dentalpräparate und/oder die Träger aufheizen. In diesen Temperaturbereichen sind die Abdampfraten der Heizelemente noch vergleichsweise niedrig und daher nicht relevant.

Falls auch in höheren Temperaturbereichen Heizelemente von oberhalb der Sinterstrecke heizen sollen, müssen diese entsprechend abgedeckt bzw. verdeckt sein. Dies kann z.B. mit Keramikplatten oder Al₂O₃-Platten oder sonstigem temperaturbeständigem Material geschehen.

Als Material für die Heizelemente kann beispielsweise eine Metalllegierung eingesetzt werden, die einen möglichst hohen Schmelzpunkt aufweist. Hier ist beispielsweise Kanthal® als Legierung möglich. Hierbei handelt es sich um eine FeCrAI-Legierung. Auch MoSi₂ in Glas kann hier verwendet werden.

In einer bevorzugten Ausführungsform haben die Träger eine Länge (Ausdehnung entlang der Bewegungsrichtung), die der Länge des kürzesten Sinterstreckensegments entspricht. Die Länge der Träger kann aber auch einem ganzzahligen Bruchteil dieser Länge, wie etwa der Hälfte, einem Drittel oder einem Viertel oder einem Fünftel etc., entsprechen. Hierdurch ist es möglich, einen, zwei, drei, vier oder fünf oder mehr Träger immer schrittweise entlang der Sinterstrecke zu verschieben und dabei sämtliche Träger und damit sämtliche Dentalpräparate das gleiche Temperaturprofil durchlaufen zu lassen. Hat der Träger beispielsweise die Länge des kürzesten Sinterstreckensegments (oder 1/n davon mit mindestens n Trägern hintereinander) und alle anderen Sinterstreckensegmente haben ein ganzzahliges Vielfaches dieser Länge und wird der Träger in einem Schritt immer um genau diese Länge weitergeschoben, so durchläuft dieser Träger und alle nachfolgenden und vorauslaufenden Träger genau das gleiche Temperaturprofil.

Die Träger weisen vorzugsweise Unterteilungen auf, bzw. Vereinzelungseinrichtungen, wie etwa Halter oder sonstige Vertiefungen oder Erhöhungen, mit denen sich mehrere Dentalpräparate in unterscheidbarer Anordnung zueinander in oder auf den Trägern anordnen lassen. Die verschiedenen Dentalpräparate müssen eindeutig identifizierbar sein, wie beispielsweise durch ihre eindeutig zuordbare Lage auf dem Träger. Würden alle Dentalpräparate, die in der Regel jeweils Unikate sind, beliebig auf den Trägern angeordnet, wäre eine eindeutige Identifizierung derselben nach dem Sintern nicht möglich bzw. nur extrem schwierig möglich.

Zum Schieben der Träger ist vorzugsweise ein Schiebeelement vorgesehen.

Um am Ende des Sinterprozesses den Sintervorgang möglichst schnell zu beenden, kann eine Kühlung, wie etwa eine Wasserkühlung, vorgesehen sein, mit der Dentalpräparate und eventuell eingesetzte Träger gekühlt werden können. Hier ist beispielsweise eine Wasserkühlung möglich, die die Wärme der Dentalpräparate bzw. der Träger abführt. Es sind beispielsweise Temperaturabfälle von 500°C bis 700°C wie etwa von 600 °C pro Stunde möglich. Bei einer Sintertemperatur von 1.450 °C ist so ein Abkühlen in ca. zweieinhalb Stunden möglich.

Die Sinterstrecke ist vorzugsweise mit einer tunnelförmigen Abdeckung versehen. Diese verhindert einen zu großen Wärmeverlust durch Konvektion und ein Verschmutzen von Dentalpräparaten. Die lichte Höhe dieses Tunnels ist vorzugsweise nicht mehr als 4 oder 3 cm. Dadurch wird eine Konvektion aus heißen Bereichen der Sinterstrecke in kältere Bereiche der Sinterstrecke reduziert, was zu einer besseren Temperaturregelung führt.

Weiterhin hat der Tunnel vorzugsweise eine lichte Breite von 30 cm bis 60 cm, vorzugsweise 35 cm bis 45 cm. Mit einer solchen Breite ist es möglich, 20 bis 30 Dentalpräparate in einer Richtung quer zur Tunnelrichtung nebeneinander anzuordnen, so dass entsprechend hohe Durchsatzraten möglich sind.

Zum Bewegen der Träger bei dem Verfahren ist es bevorzugt, diese schrittweise zu bewegen. Die Schrittweite erfolgt hier entlang eines vorgegebenen Rasters, wobei sich an diesem Raster die Sinterstreckensegmente ausrichten können und die Träger einen ganzzahligen Bruchteil oder ein Vielfaches dieses Rasters sein können. Dadurch kann gewährleistet werden, dass sämtliche Dentalpräparate die gleiche Temperaturkurve durchlaufen.

Die Träger werden vorzugsweise durch die Sinterstrecke geschoben, und zwar vorzugsweise so, dass ein Träger einen vorauslaufenden Träger weiterschiebt. So muss immer nur der letzte gerade in den Ofen einzuschiebende Träger beispielsweise durch einen Schieber bewegt werden, wobei dieser Träger dann die vorauslaufenden Träger seinerseits schiebt. Dies ermöglicht das Vermeiden von Transportmechaniken innerhalb der Sinterstrecke, die jedoch auch möglich sind.

Bei einem beispielhaften Verfahren ist es von Vorteil, wenn in einem Temperaturbereich von 900 °C bzw. oberhalb davon die Temperatur der Dentalpräparate sich nicht um mehr als 200 °C pro Stunde ändert bzw. erhöht.

Weiterhin ist ein Verfahren vorteilhaft, bei dem die Dentalpräparate nicht direkt durch Heizelemente mit Infrarotstrahlung geheizt werden, die selber eine Temperatur von mehr als 800 °C, 1.000 °C oder 1.200 °C haben, um eine Verfärbung der Dentalpräparate durch das Abdampfen der Heizelemente zu verhindern.

Beispielhafte, vorteilhafte Ausführungsformen der Erfindung sind anhand der beiliegenden Figuren erläutert. Dabei zeigt:
- Fig. 1: eine schematische Draufsicht auf einen Sinterofen;
- Fig. 2: eine schematische dreidimensionale Darstellung der Sinterstrecke;
- Fig. 3: eine schematische Schnittansicht der Sinterstrecke;
- Fig. 4: verschiedene Zustände beim Durchführen des Verfahrens;
- Fig. 5: eine detaillierte Ansicht eines Teils der Sinterstrecke; und
- Fig. 6: Beispiele von Sinterkurven.

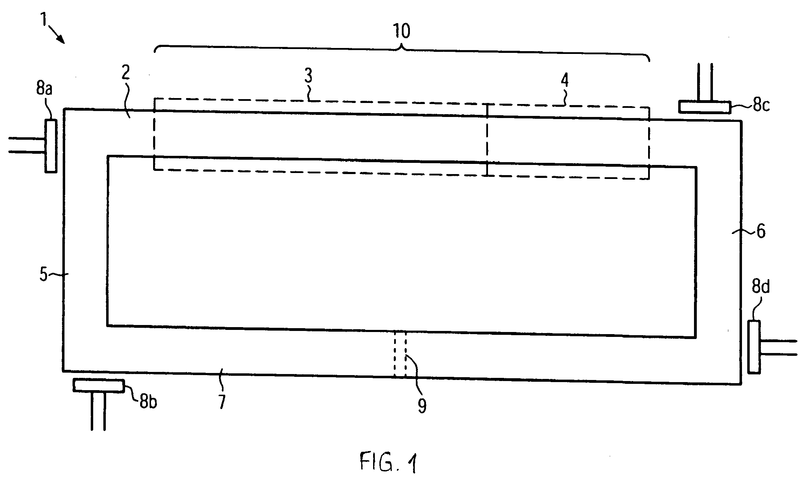

In Fig. 1 ist ein Sinterofen 1 gezeigt, der eine Sinterstrecke 10 umfasst. Die Sinterstrecke 10 ihrerseits weist einen Teil 3 auf, in dem geheizt werden kann sowie einen Teil 4, in dem gekühlt werden kann. Weiter hat der Sinterofen eine Transportstrecke 2 entlang der Dentalpräparate und/oder Träger bewegt werden können.

Der Strecke 10 ist ein Magazin 5 vorgeschaltet, in dem Dentalpräparate zum Sintern vorbereitet werden können sowie ein Magazin 6 nachgeschaltet, in dem gesinterte Dentalpräparate nach dem Sintern aufgenommen werden können.

Das Magazin 5 und das Magazin 6 sind hier jeweils gewinkelt ausgebildet, wobei an jedem Winkel ein Schieber 8a, 8b, 8c, 8d vorgesehen ist, mit dem Träger und/oder Dentalpräparate entlang einer der Segmente der Magazine 5 oder 6 oder der Sinterstrecke 10 bewegt werden können.

In Fig. 1 unten ist ein Bereich 7 dargestellt, der entweder dem Magazin 5 oder dem Magazin 6 zugeordnet werden kann. In diesem Bereich 7 kann eine Trennung 9 vorgesehen sein, die aber ortsvariabel ist, um so je nach Bedarf den Magazinteil 5 oder 6 zu vergrößern. Die Trennung 9 kann auch ganz entfallen oder ortsfest sein.

Während in Fig. 1 die Magazine 5 und 6 horizontal ausgebildet sind, ist es auch möglich, entsprechende Magazine vertikal auszubilden, in denen einzuschiebende Dentalpräparate oder Träger vertikal übereinander gesammelt werden, um dann durch die Sinterstrecke 10 geführt zu werden und/oder anschließend in einem vertikalen Magazin 6 aufgenommen zu werden.

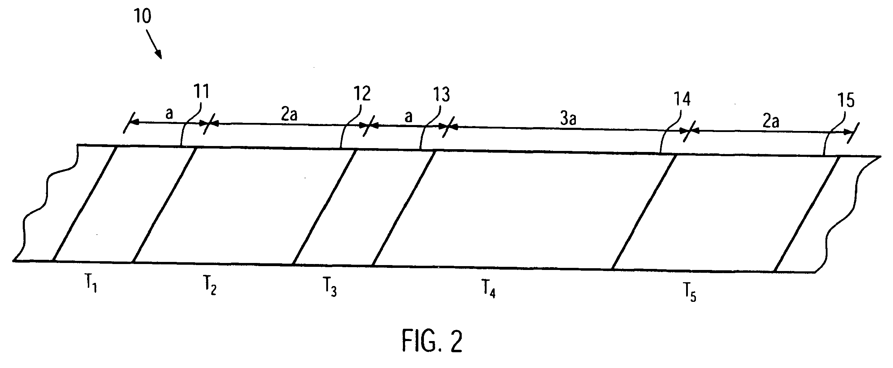

In Fig. 2 ist die Sinterstrecke 10 schematisch dreidimensional dargestellt. Die Sinterstrecke 10 weist Sinterstreckensegmente 11, 12, 13, 14, 15 auf, wobei in jedem Sinterstreckensegment eine verschiedene Temperatur T1, T2, T3, T4, T5 eingestellt werden kann. Die Sinterstreckensegmente 11 und 13 haben die gleiche Länge, nämlich die eines kürzesten Sinterstreckensegments a. Die Sinterstreckensegmente 12 und 15 haben die doppelte Länge 2a und das Sinterstreckensegment 14 die dreifache Länge 3a. In einer bevorzugten Ausführungsform hat der Sinterofen 5 bis 10 Sinterstreckensegmente, wie beispielsweise 7 Sinterstreckensegmente.

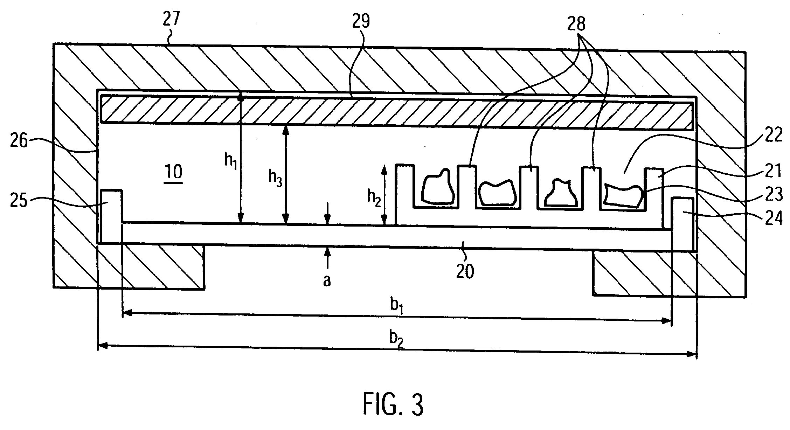

In Fig. 3 ist ein Schnitt durch den Sinterofen 1 gezeigt. Die Dentalpräparate 23 sind in Unterteilungen 22 eines Trägers 21 angeordnet. Die verschiedenen Unterteilungen 22 sind durch Wände 28 voneinander getrennt. In jeder Unterteilung 22 befindet sich ein einzelnes Dentalpräparat 23, so dass die Dentalpräparate 23 durch ihre Anordnung in dem Träger 21 eindeutig identifizierbar sind.

Ein solcher Träger 21 befindet sich auf einem beheizbaren Element 20. Dieses hat eine Dicke von beispielsweise von 1,5 bis 2,5 cm, wie beispielsweise von 2 cm. Dieses Element 20 hat seitlich angeordnete Erhebungen 24, 25, mit denen Träger 21 seitlich geführt werden können. Der in Fig. 3 dargestellte Träger 21 ist so dimensioniert, dass zwei Träger 21 davon in Bewegungsrichtung nebeneinander angeordnet werden können. Seitliche Führungen für die Träger 21 können auch unabhängig von dem beheizbaren Element 20 ausgebildet sein. Auch kann das Element 20 nur zum Unterstützen und/oder seitlichen Führen der Träger 21 nicht jedoch zum Heizen vorgesehen sein.

Der Träger 21 hat eine Höhe h2 von 2 bis 3 cm, wie beispielsweise von 2,5 cm.

Die Breite b1, die für Träger 21 zur Verfügung steht, ist beispielsweise 30 cm bis 60 cm, wie beispielsweise 35 cm bis 45 cm.

Die Breite b2 des Tunnels kann etwas größer sein, kann jedoch auch gleich b1 sein, falls sich die Erhebungen (oder etwaige seitliche Führungen) 24, 25 beispielsweise bis ans obere Ende des Tunnels erstrecken.

Die Sinterstrecke 10 ist von einer Abdeckung 27 umgeben, die einen Wärmeabtransport durch Konvektion verhindert. Die Abdeckung 27 ist unten nicht geschlossen dargestellt, kann jedoch auch geschlossen sein, um einen Wärmeverlust durch Abstrahlung nach unten zu verhindern. Die Abdeckung 27 kann aus einzelnen Segmenten zusammengesetzt sein, die zu einer gesamten Abdeckung 27 zusammengesetzt werden, oder auch einstückig ausgebildet sein.

Im oberen Bereich des Tunnels können zumindest in einigen Bereichen, wie beispielsweise am Anfang des Ofens, oder auch im gesamten Heizbereich 3 ein oder mehrere Heizelemente 29 auf der Oberseite vorgesehen sein. Dieses kann die Träger 21 sowie die Dentalpräparate 23 dann auch direkt von oben beheizen. In den Bereichen, in denen die Sintertemperatur unterhalb von beispielsweise 800 °C liegt, führt dies jedoch nicht zu Problemen in Bezug auf die Verfärbung der Dentalpräparate 23, da Heizelemente in diesen Temperaturbereichen noch ohne große Abdampfung funktionieren können. In Bereichen mit einer Temperatur von mehr als 800 °C, 1000°C oder 1200°C oder auch im gesamten Heizbereich 3 können oben verdeckte Heizelemente vorgesehen sein, die nicht direkt (mit Infrarotstrahlung) die Zahnersatzteile heizen sondern indirekt indem sie z.B. Keramikplatten oder Al₂O₃-Platten heizen, die dann Ihrerseits durch Strahlung die Zahnersatzteile heizen. Ein Heizen durch Konvektion ist mit und ohne Abdeckung der Heizelemente möglich. Die Heizelemente können auch in Keramik- oder Al₂O₃-Platten oder sonstigen bis 1450°C oder 1500°C beständigen Materialien eingelassen oder aufgenommen sein, so dass Sie von unten nicht sichtbar sind und so durch Abdampfen die Zahnersatzteile nicht verschmutzen können.

Der Ofen hat insgesamt eine lichte Höhe h3 entlang der gesamten Sinterstrecke 10 von mindestens 5 cm, wie beispielsweise 4 cm oder 3 cm und/oder nicht mehr als 6 cm, 5 cm 4 cm oder 3 cm. In den Bereichen, in denen am oberen Ende kein Heizelement 29 vorgesehen ist, kann die lichte Höhe h1 auch etwas größer sein, wie etwa mindestens 6 cm oder 5 cm oder 4 cm und/oder nicht mehr als 7 cm oder 6 cm oder 5 cm.

Das Element 20 trägt zum Einen die Träger 21, kann zum Anderen aber auch die Heizelemente aufnehmen, die weiter unten noch erläutert werden. Das Element 20 kann z. B. keramisch oder aus Al₂O₃ sein.

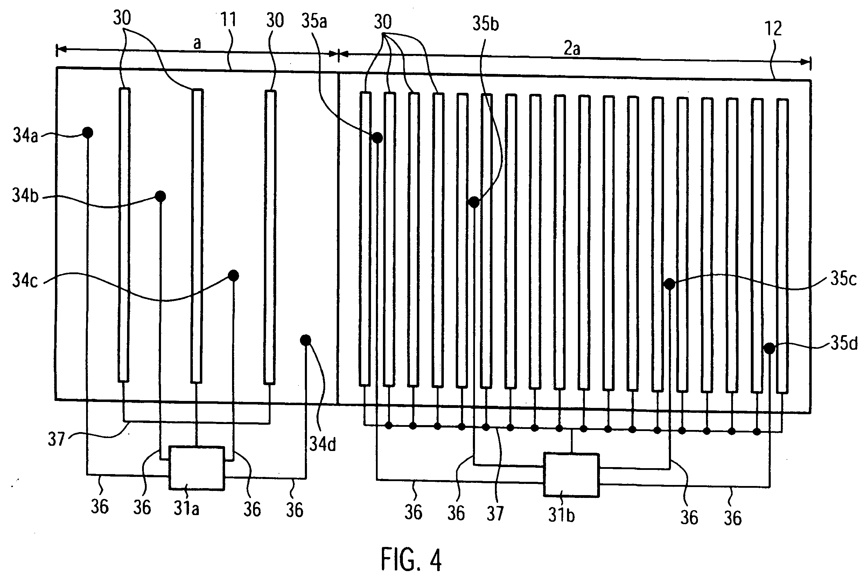

In Fig. 4 ist die Sinterstrecke 10 in einem Ausschnitt vergrößert dargestellt. In einem links dargestellten Sinterstreckensegment 11 der Länge a soll eine Temperatur von beispielsweise T1 eingestellt werden, wie etwa 600 °C. Hierfür sind drei Heizelemente 30 vorgesehen, die in das Element 20 oder 29 (siehe Fig. 3) eingelegt sind bzw. darin aufgenommen sind. Für die Regelung der Temperatur T1 in dem Sinterstreckensegment 11 ist eine Regelung 31 a vorgesehen. Diese kann die Heizleistung der Heizelemente 30 regeln. Zur Erfassung der Ist-Temperatur können eine oder mehrere Temperatursensoren 34a-34d vorgesehen sein. Diese können an verschiedenen Punkten innerhalb des Sinterstreckensegments 11 vorgesehen sein. Die Temperatursensoren sind mit der Regelung 31a über Leitungen 36 verbunden und die Heizelemente 30 über Leitungen 37. Diese sind hier zusammengefasst dargestellt, es kann jedoch auch für jedes Heizelement 30 eine eigene Leitung zu der Regelung/Steuerung 31 a / 31 b vorgesehen sein.

Es ist jedoch auch möglich, ohne eine Temperaturüberwachung durch Temperatursensoren 34a-34d zu arbeiten, wenn mit einer festen, eingestellten Leistung geheizt wird. In dem Fall ist die Schaltung 31a keine Regelung, sondern lediglich eine Steuerung. Die Heizleistung oder die einzuregelnde Temperatur ist von Hand oder durch einen Computer einstellbar. In dem Sinterstreckensegment 12 ist die Dichte der Heizelemente 30 höher. Dies führt dazu, dass beispielsweise höhere Temperaturen erreicht werden können. Auch hier können verschiedene Temperatursensoren 35a-35d vorgesehen sein, die die Ist-Temperatur der Regelung 31 b zuführen, die dann ihrerseits die Heizleistung der Heizelemente 30 regeln. Auch hier kann statt einer Regelung mit Erfassung der Ist-Temperatur lediglich eine Steuerung vorgenommen werden, bei der eine voreingestellte Heizleistung durch die Steuerung 31b erreicht wird. In den Steuerungen 31a, 31b können beispielsweise Tyristoren eingesetzt werden. Allgemein sind die Heizelemente elektrisch, d. h. sie werden mit elektrischem Strom durch ihren elektrischen Widerstand erhitzt.

Die Dichte der Heizelemente 30 kann jedoch auch in verschiedenen oder allen Sinterstreckensegmenten gleich sein. Pro Sinterstreckensegment können beispielsweise 2 bis 5 bzw. 2 bis 4 Heizelemente 30 vorgesehen sein.

Statt die Temperatursensoren 34, 35 in Fig. 4 den verschiedenen Sinterstreckensegmenten 11, 12 zuzuordnen, kann auch jeweils einem Heizelement 30 ein Temperatursensor zugeordnet sein, und jedes Heizelement einzeln auf seine Temperatur geregelt werden.

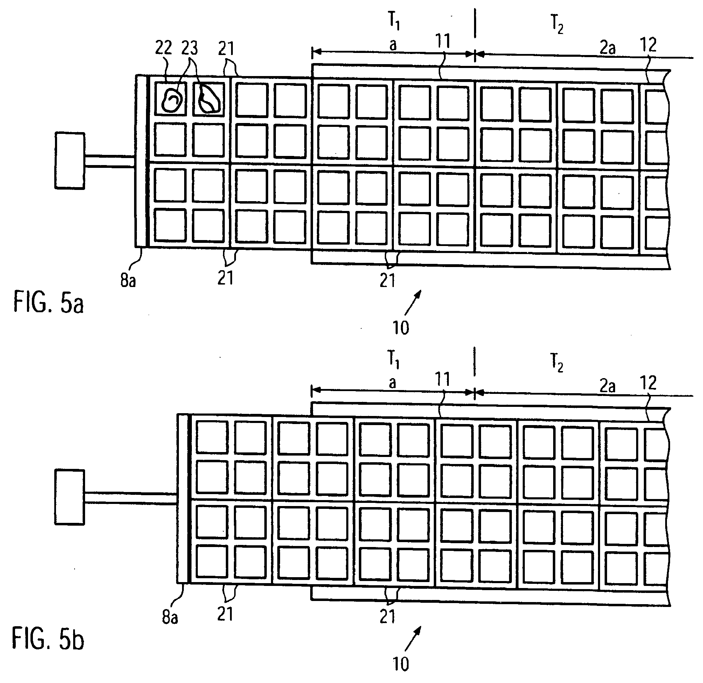

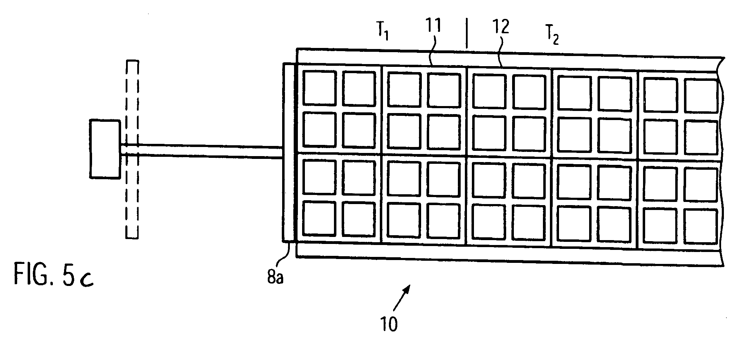

Anhand von Fig. 5 soll ein mögliches Verfahren zum Durchführen des Sinterns erläutert werden. In Fig. 5a sind eine Mehrzahl von Trägern 21 dargestellt, wobei jeder Träger hier vier Unterteilungen 22 umfasst, in denen Dentalpräparate 23 angeordnet werden können. Dies ist in Fig. 5a links oben beispielhaft für einen Träger 21 dargestellt.

Die in Fig. 5a links dargestellten vier Träger befinden sich außerhalb der Sinterstrecke 10 und können dort beispielsweise mit Dentalpräparaten 23 beladen werden. Die weiter rechts dargestellten Träger 21 befinden sich bereits auf der Sinterstrecke und die dort befindlichen Dentalpräparate werden bereits gesintert.

Nach Verstreichen eines gewissen Zeitintervalls sollen die Träger 21 weitergeschoben werden. Dazu wird der Schieber 8a betätigt, der, wie in Fig. 5b ersichtlich, sämtliche Träger 21 nach rechts verschiebt. Dies wird so lange durchgeführt bis der Zustand in Fig. 5c erreicht ist, bei dem sich die in Fig. 5a links dargestellten vier Träger 21 nun im Sinterstreckensegment 11 befinden, das auf die Temperatur T1 eingestellt ist, so dass die nun dort befindlichen Dentalpräparate 23 aufgeheizt werden, um den Sintervorgang zu beginnen.

Nach dem so erfolgten Einschieben der Träger 21 wird der Schieber 8a in seine Ursprungsposition (in Fig. 5c gestrichelt dargestellt) zurückgefahren. Dann können weitere Träger beispielsweise von der Seite eingeschoben werden (in Fig. 5c von unten nach oben oder von oben nach unten) oder vor dem Schieber 8 a eingelegt und mit Dentalpräparaten versehen werden.

Dann kann der Vorgang wieder, wie in Fig. 5a dargestellt, beginnen.

Die in Fig. 5a sich in dem Sinterstreckensegment 11 befindlichen Träger wurden durch das Verschieben in das Sinterstreckensegment 12 weiter befördert, so dass sie dort einer erhöhten Temperatur zugeführt werden, so dass der Sinterprozess fortgesetzt wird.

Während der Zustand in Fig. 5a bzw. 5c mehrere Minuten beibehalten werden kann, wie etwa mehr als 10, 20, 30 oder 40 Minuten oder weniger als 30, 40, 50 oder 60 Minuten, erfolgt das Schieben wie in Fig. 5b dargestellt, also die Bewegung von dem Zustand in Fig. 5a bis zum Erreichen des Zustands in Fig. 5c, in beispielsweise weniger als 1 oder 2 Minuten. Dadurch wird ein schrittweises Schieben erreicht. Beim schrittweisen Schieben, verharren die Träger z.B. mindestens 5 oder 10 oder 20 mal solange in Ruhe im Vergleich zu der Zeit die Sie bewegt werden.

Alternativ ist es jedoch auch möglich, dass die Träger 21 kontinuierlich gefördert werden, also nicht schrittweise. Dabei kann das Schieben, ausgehend von dem Zustand in Fig. 5a bis zum Erreichen des Zustands in Fig. 5c, so langsam erfolgen, dass dies beispielsweise mehr als 10, 20, 30 oder 40 Minuten oder weniger als 30, 40, 50 oder 60 Minuten dauert. Das Zurückfahren des Schiebers 8a (siehe Fig. 5c) erfolgt dann relativ schnell, beispielsweise innerhalb von weniger als 1 oder 2 Minuten und unmittelbar danach wird mit dem erneuten Nachschieben von Trägern 21 begonnen, die zuvor mit Dentalpräparaten 23 versehen wurden. Bein kontinuierlichen Schieben stehen die Träger niemals still oder nur weniger als 1/5 oder 1/10 oder 1/20 der Zeit, die Sie zwischen zwei Stillständen bewegt werden.

Eine Unterteilung der Sinterstrecke in verschiedene Sinterstreckensegmente mit jeweils einer Temperatur kann beim kontinuierlichen Schieben entfallen. Es kann ein kontinuierliches Temperaturprofil eingestellt werden.

Die Einstellung der Temperaturen in den verschiedenen Sinterstreckensegmenten und das Schieben der Träger 21 bzw. das Bewegen der Dentalpräparate 23 erfolgt vorzugsweise so, dass bei einer Temperatur der Dentalpräparate von oberhalb 900 °C, ein Erhöhen der Temperatur um mehr als 200 °C pro Stunde nicht stattfindet. In diesem Temperaturbereich erfolgen Gefügeveränderungen in beispielsweise yttriumdotierten Zirkonkeramiken, die für Dentalpräparate verwendet werden können.

Die Träger 21 sind beispielsweise aus Al₂O₃, wie etwa porös durchgesintertem Al₂O₃, ausgebildet. Dieses ist hinreichend temperaturbeständig, um ein Sintern bis zu 1.450 oder 1.500 °C zu ermöglichen.

Die Dentalpräparate können beispielsweise Kronen, Overlays, Inlays, Brücken, Brückengerüste, Käppchen oder sonstige Dentalpräparate sein.

Während in Fig. 5 die Träger 21 eine Länge von a/2 haben, können die Träger jedoch auch eine Länge von a/3 oder a/4 haben, bzw. eine Länge von gleich a. Die Breite in Richtung quer zur Transportrichtung kann ebenfalls ein ganzzahliger Bruchteil oder gleich der Breite b1 sein (siehe Fig. 3).

Durch das Einschieben von Trägern 21 auf die Sinterstrecke werden auch Träger 21 in den Kühlbereich 4 weiterbewegt, in dem die Träger bzw. Dentalpräparate abgekühlt werden und auch werden Träger 21 aus dem Bereich des Kühlens ganz aus der Sinterstrecke herausgeschoben.

Statt Träger 21 in die Sinterstrecke zu geben, können auch Platzhalter eingeschoben werden, die beispielsweise keine Aufnahmemöglichkeit für Dentalpräparate 23 haben, sondern lediglich dazu dienen, den schrittweisen Schiebevorgang oder den kontinuierlichen Schiebevorgang weiter zu betreiben und dabei beispielsweise den Sinterofen leer zu fahren, so dass nur noch Platzhalter und keine Dentalpräparate mehr im Sinterofen sind.

Statt Träger 21 entlang der Sinterstrecke dadurch zu schieben, dass immer neue Träger 21 auf die Sinterstrecke geschoben werden, ist es auch möglich, Träger 21 jeweils direkt mit entsprechenden Transportmitteln bewegen zu lassen. Hierzu können beispielsweise Ketten oder ähnliches vorgesehen sein, auf denen die Träger bewegt werden oder mit denen die Träger gezogen oder geschoben werden.

Der Transportmechanismus, mit dem die Träger 21 entlang dem Kühlbereich 4 bewegt werden, ist vorzugsweise der Gleiche, mit dem die Träger entlang des Heizbereichs 3 bewegt werden.

Die Träger 21 können beispielsweise auch mit Platten aus dem selben Material wie die Träger 21 abgedeckt werden, um so eine Verunreinigung der Dentalpräparate weitgehend zu verhindern. Dann können auch im gesamten Ofen im Heizbereich 3 Heizelemente oberhalb von den Präparaten eingesetzt werden oder sogar nur Heizelemente oberhalb jedoch nicht unterhalb der Dentalpräparate und/oder Träger in der Sinterstrecke eingesetzt werden. Bei oberhalb der Bahn der Träger/Zahnersatzteile angeordneten Heizelementen, die insgesamt oder zumindest im hohen Temperaturbereich von oberhalb von 800°C, 1000°C oder 1200°C verdeckt sind, können auch Träger 21 ohne Abdeckung darauf verwendet werden.

Die verschiedenen Träger sind vorzugsweise identifizierbar wie z. B. mit Nummern oder sonstigen Erkennungen versehen. Dies erleichtert bei einer Mehrzahl von Trägern eine eindeutige Zuordnung der Dentalpräparate.

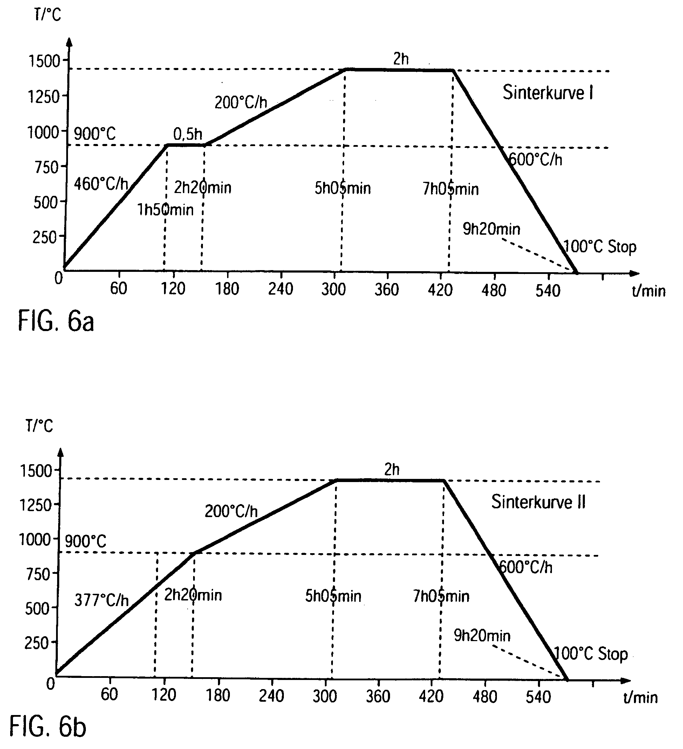

In Fig. 6a und 6b sind verschieden gewünschte Temperaturverläufe für einen Sintervorgang von yttriumdotierten Zirkonoxidkeramiken dargestellt. Bis 900 °C erfolgt ein Aufheizen möglichst schnell, z. B. mit 300 °C/h bis 500 °C/h. Bei 900 °C kann ein Moment die Temperatur beibehalten werden (siehe Fig. 6a), darüber wird mit 200 °C/h weitergeleitet bis zur Maximaltemperatur von 1.450 °C. Die Maximaltemperatur wird für 2 h beibehalten und dann mit 600 °C/h abgekühlt.

Bei z.B. sechs Sinterstreckensegmenten können die fünf aufeinander folgenden Temperaturen in den ersten fünf gleichlangen Sinterstreckensegementen 400°C, 700°C, 900°C, 1100°C und 1300°C, betragen und in einem dann folgenden doppelt so langen Sinterstreckensegement 1450°C. Durch Schieben der Träger um jeweils die Länge eines der ersten Sinterstreckensegmente pro Stunde kann in etwa die Sinterkurve aus Figur 6b nachempfunden werden.

In einer vorteilhaften Ausführungsform der Erfindung umfasst der Sinterofen eine Steuerung die vorzugsweise eine Visualisierung des Sinterprozesses bzw. des Sintervorgangs ermöglicht. Die bei dem Betrieb des Ofens erfassten bzw. eingestellten Parameter und andere durch Steuerung gegebenen Parameter wie z.B. die Betätigungen eines Schiebers können unveränderbar aufgezeichnet werden und unbegrenzt gespeichert werden. Damit wird eine Belegbarkeit der Einhaltung der benötigten Sinterparameter ermöglicht. Dies dient zur Rückverfolgung von z.B. schadhaften Zahnersatzteilen etc. bei Reklamationen o.ä.

Die abgespeicherten Daten können verschiedenen Benutzern zugänglich gemacht werden, wobei hierbei unterschiedliche Befugnisse von Benutzern eingestellt werden können, die die Darstellung, Extraktion etc. von den gespeicherten Daten betreffen. Die Einstellung von Prozessparametern zum Betrieb des Ofens kann ebenfalls für verschiedene Benutzer mit verschiedenen Befugnissen vorgenommen werden. Es können z.B. Benutzer vorgesehen sein, die keine, die einige oder die alle Prozessparameter einstellen können.

## Patentansprüche

1. Sinterofen (1) für Dentalpräparate mit:
einer Sinterstrecke (10), entlang der die Dentalpräparate (23) bewegt werden können,
wobei entlang der Sinterstrecke (10) verschiedene Temperaturen (T₁, T₂,...) eingestellt werden können,
**dadurch gekennzeichnet, dass**
die Sinterstrecke (10) in einzelne Sinterstreckensegmente (11, 12, 13, 14, 15) eingeteilt ist, wobei sämtliche Sinterstreckensegmente eine Länge na haben, die dem ganzzahligen Vielfachen mit n = 1, 2, 3... der Länge a eines kürzesten Sinterstreckensegments (11, 13) entspricht, wobei in jedem Sinterstreckensegment eine der verschiedenen Temperaturen eingestellt werden kann.

2. Sinterofen nach Anspruch 1, **dadurch gekennzeichnet, dass** zum Heizen der Sinterstrecke (10) Heizelemente (30) vorgesehen sind, die oberhalb und/oder unterhalb der Sinterstrecke angeordnet sind.

3. Sinterofen nach Anspruch 1 oder 2, **dadurch gekennzeichnet, dass** Träger (21) für Dentalpräparate (23) vorgesehen sind, die entlang der Sinterstrecke bewegt werden können.

4. Sinterofen nach Anspruch 3, **dadurch gekennzeichnet, dass** die Träger (21) eine Länge haben, die der Länge des kürzesten Sintersegments oder einem ganzzahligen Bruchteil 1/m, vorzugsweise mit m kleiner als 10 entspricht.

5. Sinterofen nach Anspruch 3 oder 4, **dadurch gekennzeichnet, dass** die Träger (21) Unterteilungen (22) oder Vereinzelungseinrichtungen (28) aufweisen, mit denen mehrere Dentalpräparate in unterscheidbarer Anordnung zueinander aufgenommen werden können.

6. Sinterofen nach einem der Ansprüche 3 bis 5, **dadurch gekennzeichnet, dass** ein Schiebeelement (18a) vorgesehen ist, mit dem Träger (21) entlang der Sinterstrecke (10) geschoben werden können, wobei das Schiebeelement vorzugsweise außerhalb der Sinterstrecke angeordnet ist.

7. Sinterofen nach einem der vorangehenden Ansprüche, **dadurch gekennzeichnet, dass** am Ende der Sinterstrecke (10) eine Kühlung (4) zum Kühlen der Dentalpräparate (23) vorgesehen ist, wie etwa eine Wasserkühlung.

8. Sinterofen nach einem der vorangehenden Ansprüche, **dadurch gekennzeichnet, dass** eine tunnelförmige Abdeckung (27) vorgesehen ist, mit der die Sinterstrecke (10) abgedeckt ist.

9. Sinterofen nach einem der vorangehenden Ansprüche, **dadurch gekennzeichnet, dass** die Sinterstrecke (10) als Tunnel ausgeführt ist, wobei vorzugsweise die lichte Höhe des Tunnels nicht mehr als 10 cm, 8 cm, 6 cm, 4 cm oder 3 cm beträgt.

10. Sinterofen nach Anspruch 9, **dadurch gekennzeichnet, dass** die lichte Breite des Tunnels 30 cm bis 60 cm, vorzugsweise 35 bis 45 cm, beträgt.

## Claims

1. Sintering furnace (1) for dental prostheses with:
a sintering section (10), along which the dental prostheses (23) can be moved,
wherein different temperatures (T₁, T₂,...) may be set along the sintering section (10)
**characterised in that**
the sintering section (10) is divided into single sintering section segments (11, 12, 13, 14, 15) wherein all sintering segment sections have a length na which corresponds to the integer multiple with n = 1, 2, 3... of the length a of a shortest sintering section segment (11, 13) wherein in each sintering section segment one of the different temperatures can be set.

2. Sintering furnace according to claim 1, **characterised in that** heating elements (30) being arranged above and/or below the sintering section are provided for heating the sintering section (10).

3. Sintering furnace according to claim 1 or 2, **characterised in that** for the dental prostheses (23) carriers (21) are provided being movable along the sintering section.

4. Sintering furnace according to claim 3, **characterised in that** the carriers (21) have a length corresponding to the length of the shortest sintering segment or an integer fraction 1/m, preferably with m smaller than 10.

5. Sintering furnace according to claim 3 or 4, **characterised in that** the carriers (21) comprise subdivisions (22) or separation devices (28) by which several dental prostheses can be carried in distinguishable arrangement to each other.

6. Sintering furnace according to any of claims 3 to 5 **characterised in that** a sliding element (18a) is provided by which the carriers (21) can be slid along the sintering section (10), wherein preferably the sliding element is provided outside of the sintering section.

7. Sintering furnace according to one of the preceding claims **characterised in that** at the end of the sintering section (10) a cooling (4) for cooling the dental prostheses (23) is provided, such as a water-cooling.

8. Sintering furnace according to one of the preceding claims **characterised in that** a tunnel-shaped cover (27) is provided by which the sintering section (10) is covered.

9. Sintering furnace according to one of the preceding claims, **characterised in that** the sintering section (10) is realised as tunnel, wherein preferably the clear height of the tunnel is not more than 10 cm, 8 cm, 6 cm, 4 cm or 3 cm.

10. Sintering furnace according to claim 9, **characterised in that** the clear width of the tunnel is 30 cm to 60 cm, preferably 35 to 45 cm.

## Revendications

1. Four de frittage (1) pour préparations dentaires, comprenant :
un parcours de frittage (10) le long duquel peuvent être déplacées les préparations dentaires (23),
des températures différentes (T₁, T₂, ...) pouvant être réglées le long du parcours de frittage (10),
**caractérisé en ce que**
le parcours de frittage (10) est subdivisé en segments de parcours de frittage individuels (11, 12, 13, 14, 15), tous les segments de parcours de frittage ayant une longueur na, qui correspond à un multiple entier, avec n = 1, 2, 3..., de la longueur a d'un segment de parcours de frittage le plus court (11, 3), et dans chaque segment de parcours de frittage il est possible de régler l'une des différentes températures.

2. Four de frittage selon la revendication 1, **caractérisé en ce que** pour chauffer le parcours de frittage (10), sont prévus des éléments chauffants (30), qui sont agencé au-dessus et/ou en-dessous du parcours de frittage.

3. Four de frittage selon la revendication 1 ou la revendication 2, **caractérisé en ce que** sont prévus des supports (21) pour des préparations dentaires (23), qui peuvent être déplacés le long du parcours de frittage.

4. Four de frittage selon la revendication 3, **caractérisé en ce que** les supports (21) ont une longueur, qui correspond à la longueur du segment de frittage le plus court ou à une fraction l/m entière, de préférence avec m inférieur à 10.

5. Four de frittage selon la revendication 3 ou la revendication 4, **caractérisé en ce que** les supports (21) présentent des subdivisions (22) ou des dispositifs de séparation individuelle (28), permettant d'accueillir plusieurs préparations dentaires selon un agencement distinctif les unes par rapport aux autres.

6. Four de frittage selon l'une des revendications 3 à 5, **caractérisé en ce qu'**il est prévu un élément-poussoir (18a) à l'aide duquel des supports (21) peuvent être poussés le long du parcours de frittage (10), l'élément-poussoir étant de préférence agencé à l'extérieur du parcours de frittage.

7. Four de frittage selon l'une des revendications précédentes, **caractérisé en ce qu'**à la fin du parcours de frittage (10), il est prévu un refroidissement (4) pour refroidir les préparations dentaires (23), comme par exemple un refroidissement par eau.

8. Four de frittage selon l'une des revendications précédentes, **caractérisé en ce qu'**il est prévu un recouvrement en forme de tunnel (27), à l'aide duquel est recouvert le parcours de transport (10).

9. Four de frittage selon l'une des revendications précédentes, **caractérisé en ce que** le parcours de transport (10) est réalisé sous forme de tunnel, la hauteur libre du tunnel ne valant de préférence pas plus de 10 cm, 8cm, 6cm, 4 cm ou 3 cm.

10. Four de frittage selon la revendication 9, **caractérisé en ce que** la largeur libre du tunnel a une valeur de 30 cm à 60 cm, de préférence de 35 à 45 cm.
